# EUROPEAN PATENT SPECIFICATION

(11) **EP 4 184 682 B1**
(45) Date of publication and mention of the grant of the patent: **15.10.2025**
(21) Application number: 22807669.1
(22) Date of filing: 27.04.2022
(51) Int. Cl.: H01M 50/24, H01M 50/502, H01M 50/211, H01M 50/209, H01M 50/224, H01M 50/227, H01M 50/271, H01M 50/296, H01M 50/50, H01M 50/503, H01M 50/507, H01M 50/553, H01M 50/522, H01M 50/204

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 11.05.2021 KR 20210060831
(43) Date of publication of application: 24.05.2023
(73) Proprietor: LG Energy Solution, Ltd., Seoul 07335 (KR)
(72) Inventor: YUN, Hyun Seop, Daejeon 34122 (KR); SEONG, Junyeob, Daejeon 34122 (KR); PARK, Won Kyoung, Daejeon 34122 (KR)
(74) Representative: Goddar, Heinz J.
(86) International application number: PCT/KR2022/006007
(87) International publication number: WO 2022/240021

(56) References cited:
- WO-A1-2020/080039
- CA-A1- 3 132 186
- CN-A- 111 554 837
- CN-A- 112 585 801
- JP-A- 2014 060 019
- KR-A- 20150 034 618
- KR-A- 20170 075 484
- KR-A- 20210 046 684
- KR-A- 20210 048 855
- US-A1- 2017 025 663

## Description

### [TECHNICAL FIELD]

### Cross Citation with Related Application(s)

This application claims the benefit of Korean Patent Application No. 10-2021-0060831 filed on May 11, 2021 with the Korean Intellectual Property Office.

The present disclosure relates to a battery module and a battery pack including the same, and more particularly, to a battery module having enhanced safety and a battery pack including the same.

### [BACKGROUND]

Along with the technology development and increased demand for mobile devices, demand for secondary batteries as energy sources has been increasing rapidly. Accordingly, many researches on the secondary battery capable of meeting various demands are being performed.

A secondary battery has attracted considerable attention as an energy source for powerdriven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of middle- or large-sized module structure which is an assembly of battery modules in which a plurality of secondary batteries are connected in series or in parallel.

Meanwhile, when a plurality of battery cells are connected in series or in parallel to configure a battery pack, it is common to configure a battery module composed of at least one battery cell and then configure a battery pack by using at least one battery module and adding other components. Since the battery cells constituting these middle or large-sized battery modules are composed of chargeable/dischargeable secondary batteries, such a high-output and large-capacity secondary battery generates a large amount of heat in a charge and discharge process.

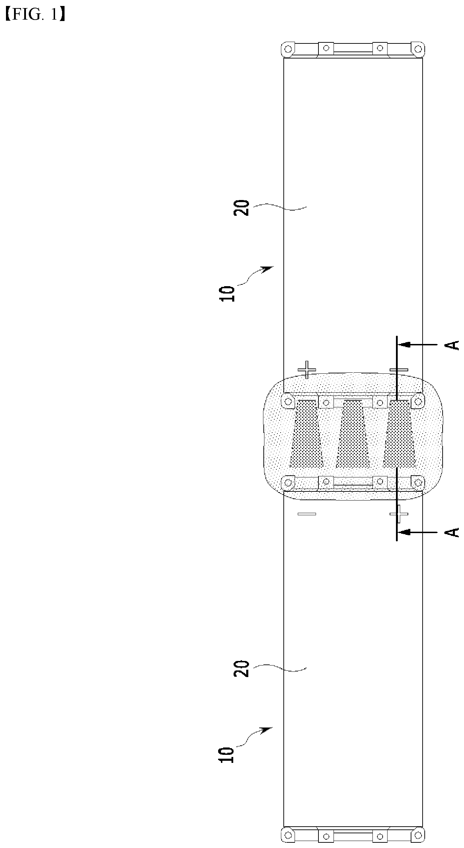

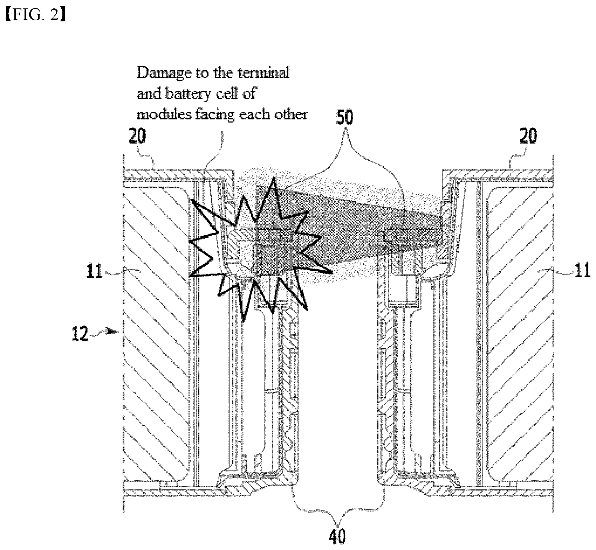

Fig. 1 is a diagram showing the appearance at the time of ignition of a battery module mounted on a conventional battery pack. Fig. 2 shows a section A-A of Fig. 1, which is a cross-sectional view showing the appearance of a flame that affects adjacent battery modules at the time of ignition of a battery module mounted on a conventional battery pack.

Referring to Figs. 1 and 2, the conventional battery module 10 includes a battery cell stack 12 in which a plurality of battery cells 11 are stacked, a module frame 20 that houses the battery cell stack 12, end plates 40 that are formed on the front and rear surfaces of the battery cell stack 12, a terminal busbar 50 formed so as to protrude out of the end plate, and the like.

The battery cell stack 12 may be located in a sealed structure by coupling the frame 20 and the end plate 40. Consequently, when the internal pressure of the battery cell 11 increases due to overcharging or the like, the high-temperature heat, gas, or flame may be discharged to the outside of the battery cell 11, wherein the heat, gas, flame or the like discharged from one battery cell 11 may be transferred to other adjacent battery cells 11 at a narrow interval to induce a continuous ignition phenomenon. Additionally, the heat, gas, flame or the like discharged from each battery cell 11 may be discharged toward an opening formed in the end plate 40. In this process, there may be a problem that a busbar 50 or the like located between the end plate 40 and the battery cell 11 is damaged.

Moreover, the plurality of battery modules 10 within the battery pack are arranged such that at least two end plates 40 face each other, and thus, when the heat, gas, flame or the like generated within the battery module 10 is discharged to the outside of the battery module 10, it may affect the performance and stability of the plurality of battery cells 11 within other adjacent battery modules 10.

Therefore, there is a need to design the battery module 10 that prevents continuous ignition phenomenon by preventing the heat, gas or flame generated inside the battery module 10 from being discharged to the adjacent battery module 10. KR 2021 0048855 A discloses a battery module comprising:a battery cell stack in which a plurality of battery cells are stacked in one direction, a module frame that houses the battery cell stack,a busbar frame that covers a front surface or a rear surface of the battery cell stack, and an end plate that couples to the module frame and covers the busbar frame,wherein the end plate is formed with at least one opening, wherein a part of an inner member of the battery module is exposed to the outside through the opening.

### [DETAILED DESCRIPTION OF THE INVENTION]

### [Technical Problem]

It is an object of the present disclosure to provide a battery module having improved durability and safety by preventing continuous thermal runaway phenomenon, and a battery pack including the same.

However, the problem to be solved by the embodiments of the present disclosure is not limited to the above-described problems, and can be variously expanded within the scope of the technical idea included in the present disclosure.

### [Technical Solution]

According to one embodiment of the present disclosure, there is provided a battery module comprising: a battery cell stack in which a plurality of battery cells are stacked in one direction, a module frame that houses the battery cell stack, a busbar frame that covers the front surface or the rear surface of the battery cell stack, and an end plate that couples to the module frame and covers the busbar frame, wherein the end plate is formed with at least one opening, wherein a part of the inner member of the battery module is exposed to the outside through the opening, and wherein a gap between the inner member and the opening is sealed with a sealing member.

The battery module includes a busbar for electrical connection with an external device, or a module connector, and the protrusion of the busbar or a terminal of the module connector is exposed to the outside through the opening.

The sealing member may be in contact with the protrusion of the busbar.

The sealing member may be in contact with the module connector.

The sealing member may be a flame retardant material.

The flame retardant material may include silicone or polyurethane.

According to another embodiment of the present disclosure, there is provided a method for manufacturing a battery module, the method comprising the steps of: applying a liquid state resin to a periphery of the inner member mounted on a busbar frame, arranging an end plate on the busbar frame and coupling the module frame and the end plate, and curing the resin.

According to yet another embodiment of the present disclosure, there is provided a method for manufacturing a battery module, the method comprising the steps of: arranging an end plate on a busbar frame, and coupling the module frame and the end plate; injecting a liquid state resin through an opening formed in the end plate; and curing the resin.

According to yet another embodiment of the present disclosure, there is provided a battery pack comprising at least one battery module described above.

### [Advantageous Effects]

According to embodiments of the present disclosure, by sealing the gap around the opening formed in the end plate of the battery module, the thermal runaway phenomenon occurring in one battery module can be prevented from propagating to adjacent battery modules.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing the appearance at the time of ignition of a battery module mounted on a conventional battery pack;
Fig. 2 shows a section A-A of Fig. 1, which is a cross-sectional view showing the appearance of a flame that affects adjacent battery modules at the time of ignition of a battery module mounted on a conventional battery pack;
Fig. 3 is a perspective view which shows a battery module according to an embodiment of the present disclosure;
Fig. 4 is an exploded perspective view of the battery module of Fig. 3;
Fig. 5 is a perspective view of a battery cell included in the battery module of Fig. 3;
Fig. 6 is a diagram for explaining a sealing member included in the battery module of Fig. 3;
Fig. 7 is a view in which the end plate is omitted from the battery module of Fig. 3; and
Fig. 8 is another diagram for explaining a sealing member included in the battery module of Fig. 3.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similar to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Below, a battery module according to an embodiment of the present disclosure will be described.

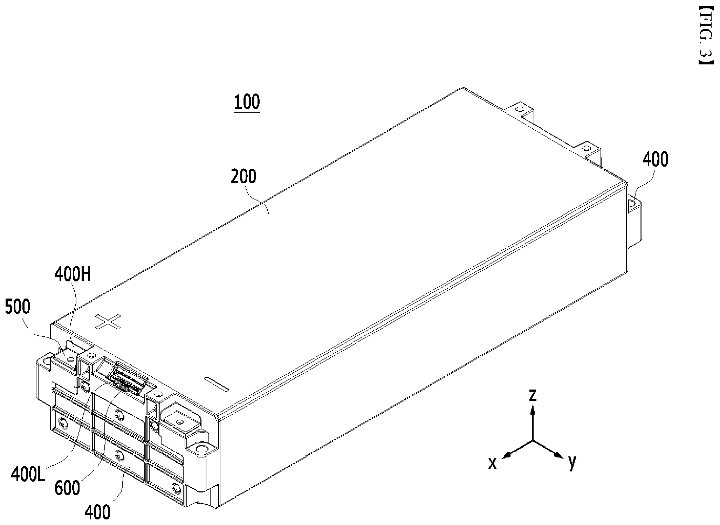

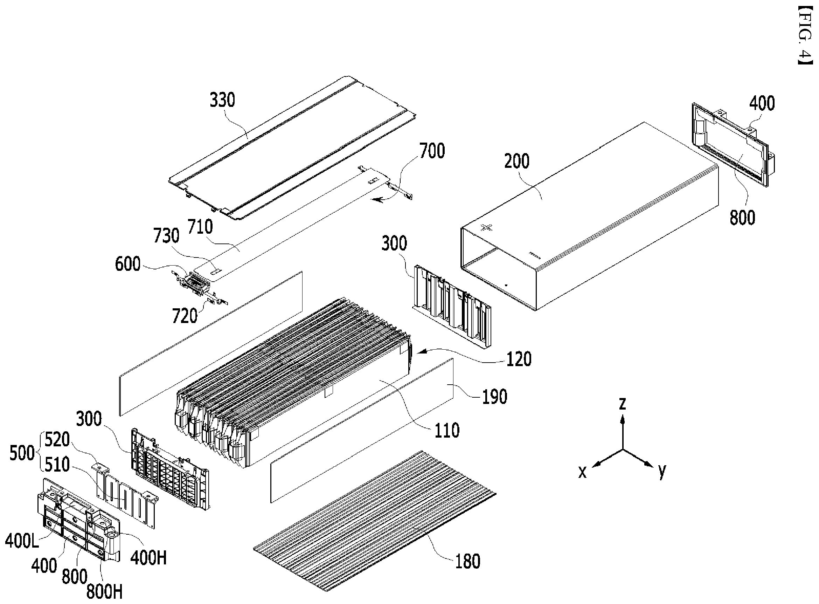

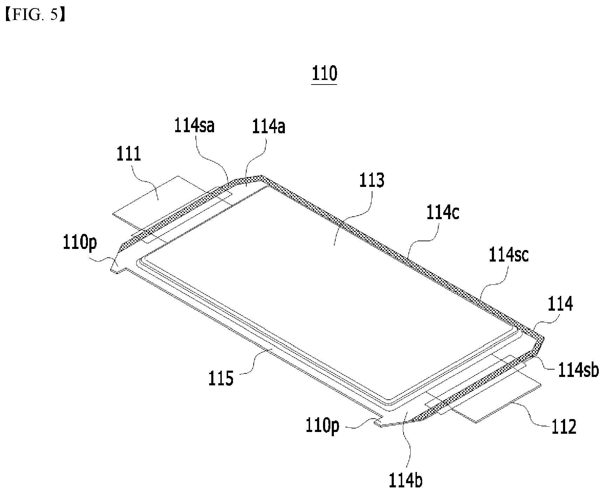

Fig. 3 is a perspective view which shows a battery module according to an embodiment of the present disclosure. Fig. 4 is an exploded perspective view of the battery module of Fig. 3. Fig. 5 is a perspective view of a battery cell included in the battery module of Fig. 3.

Referring to Figs. 3 and 4, the battery module 100 according to an embodiment of the present disclosure may include a battery cell stack 120 in which a plurality of battery cells 110 are stacked along one direction, a module frame 200 that houses the battery cell stack 120, a busbar frame 300 located on the front surface and/or the rear surface of the battery cell stack 120, an end plate 400 that covers the front surface and/or the rear surface of the battery cell stack 120, busbars 510 and 520 and a module connector 600 mounted on the busbar frame 300, and a sensing member 700.

The battery cells 110 can be provided in a pouch shape in which the number of cells stacked per unit area can be maximized. The battery cell 110 provided in the pouch shape can be manufactured by housing an electrode assembly including a positive electrode, a negative electrode, and a separator in a cell case 114 of a laminate sheet and then heat-sealing the sealing part of a cell case 114. However, it will be obvious that the battery cell 110 need not be essentially provided in a pouch shape, and can be provided in prismatic, cylindrical, or other various shapes, at a level where the storage capacity required by the device to be mounted in the future is achieved.

Referring to Fig. 5, the battery cell 110 may include two electrode leads 111 and 112. The electrode leads 111 and 112 may have a structure protruding from one end of the cell main body 113, respectively. Specifically, one end of respective electrode leads 111 and 112 is located inside the battery cell 110 and thereby can be electrically connected to the positive electrode or negative electrode of the electrode assembly, and the other end of the respective electrode leads 111 and 112 is protruded to the outside of the battery cell 110, and thereby can be electrically connected with a separate member, for example, busbars 510 and 520.

The electrode assembly within the cell case 114 can be sealed with the sealing parts 114sa, 114sb and 114sc. The sealing parts 114sa, 114sb and 114sc of the cell case 114 may be located on both end parts 114a and 114b and one side part 114c connecting them.

The cell case 114 is generally formed of a laminate structure of a resin layer/metallic thin film layer/resin layer. For example, when a surface of the cell case is formed of an O(oriented)-nylon layer, it tends to slide easily by an external impact when stacking a plurality of battery cells 110 in order to form a medium- or large-sized battery module 100. Therefore, in order to prevent this sliding and maintain a stable stacking structure of the battery cells 110, an adhesive member, for example, a sticky adhesive, such as a double-sided tape or a chemical adhesive coupled by a chemical reaction upon adhesion, can be adhered to the surface of the battery case 114 to form a battery cell stack 120.

A connection part 115 may refer to a region extending along the longitudinal direction at one end of the cell case 114 in which the above-mentioned sealing parts 114sa, 114sb and 114sc are not located. A protrusion 110p of the battery cell 110 called a bat-ear may be formed at an end part of the connection part 115. Further, a terrace part 116 may refer to a region between electrode leads 111 and 112 in which a part thereof protrudes to the outside of the cell case 114, and the cell main body 113 located inside the cell case 114, on the basis of the edge of the cell case 114.

Here, the longitudinal direction of the battery cell 110 may be defined in accordance with the direction in which the electrode leads 111 and 112 protrude from a cell case 114. The longitudinal direction of the battery cell 110 may be defined as an x-axis direction or a -x-axis direction.

The battery cell stack 120 may be one in which a plurality of electrically connected battery cells 110 are stacked along one direction. A direction in which the plurality of battery cells 110 are stacked (hereinafter referred to as a 'stacking direction') may be a y-axis direction as shown in Figs. 3 and 4 (or it may be a -y-axis direction, and in the following, the expression 'axial direction' may be interpreted as including all +/- directions).

Here, a direction in which the battery cell stack 120 heads from the front surface to the rear surface, or a backward direction thereof may be defined as the longitudinal direction of the battery cell stack 120, which may be an x-axis direction. Further, a direction in which the battery cell stack 120 heads from the upper surface to the lower surface, or a backward direction thereof may be defined as the width direction of the battery cell stack 120, which may be a z-axis direction.

The module frame 200 may be for protecting the battery cell stack 120 and the electrical components connected thereto from external physical impacts. The battery cell stack 120 and the electric device module frame 200 connected thereto may be housed in the internal space of the module frame 200. Here, the module frame 200 includes an inner surface and an outer surface, and the inner space of the module frame 200 may be defined by the inner surface.

The module frame 200 may have various structures. In one example, the structure of the module frame 200 can be a mono frame structure. Here, the mono frame may be in a metal plate shape in which the upper surface, the lower surface and both side surfaces are integrated. The mono frame can be manufactured by extrusion molding. In another example, the structure of the module frame 200 may be a structure in which a U-shaped frame and an upper plate (upper surface) are combined. In the case of a structure in which the U-shaped frame and the upper plate are combined, the structure of the module frame 200 may be formed by coupling the upper plate to the upper side surfaces of the U-shaped frame, which is a metal plate in which the lower surface and both side surfaces are combined or integrated. Each frame or plate can be manufactured by press molding. Further, the structure of the module frame 200 can be provided in the structure of an L-shaped frame in addition to the mono frame or the U-shaped frame, and may be provided in various structures that are not described in the above-mentioned examples.

The structure of the module frame 200 may be provided in a shape that is opened along the longitudinal direction of the battery cell stack 120. The front surface and the rear surface of the battery cell stack 120 may not be covered by the module frame 200. The electrode leads 111 and 112 of the battery cells 110 may not be covered by the module frame 200. The front surface and the rear surface of the battery cell stack 120 may be covered by the busbar frames 300, the end plate 400, the busbars 510 and 520, or the like, which will be described later. Thereby, the front surface and the rear surface of the battery cell stack 120 can be protected from external physical impacts and the like.

Meanwhile, a heat conductive member 180 may be provided between the battery cell stack 120 and the inner surface of the module frame 200. The heat conductive member 180 may be for discharging/transmitting heat generated in the battery cell 110 to the outside via the module frame 200. The heat conductive member 180 may be formed of a material having excellent thermal conductivity. The heat conductive member 180 may include an adhesive material. For example, the heat conductive member 180 may include at least one of a silicone-based material, a urethanebased material, and an acrylic-based material.

The heat conductive member 180 may be formed by injecting a heat conductive resin between the battery cell stack 120 and one side surface of the inner surfaces of the module frame 200. However, this is not always the case, and the heat conductive member 180 may be a plate-shaped member. The heat conductive member 180 may be located on the z-axis of the battery cell stack 120, and the heat conductive member 180 may be located between the battery cell stack 120 and the bottom surface (or may be referred to as a bottom part) of the module frame 200.

Further, a compression pad 190 may be located between the battery cell stack 120 and one side surface of the inner surface of the module frame 200. At this time, the compression pad 190 may be located on the y-axis of the battery cell stack 120, and may face at least one surface of the two battery cells 110 at both ends of the battery cell stack 120.

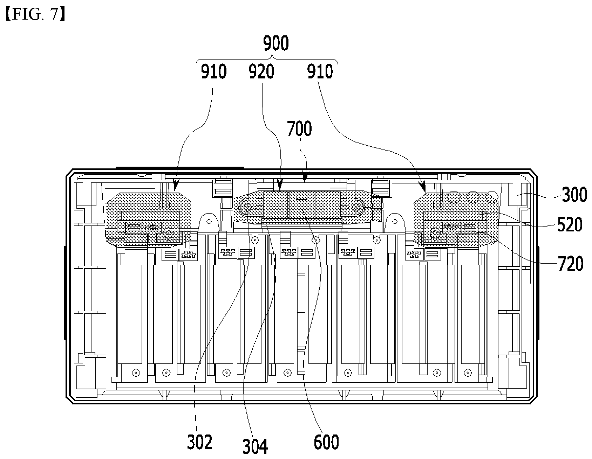

The busbar frame 300 can be located on one surface of the battery cell stack 120 to cover one surface of the battery cell stack 120 and, at the same time, guide the connection between the battery cell stack 120 and an external device. The busbar frame 300 may be located on the front surface or the rear surface of the battery cell stack 120. At least one of the busbar 500 and the module connector 600 may be mounted on the busbar frame 300. As a specific example, referring to Figs. 3 and 4, one surface of the busbar frame 300 is connected with the front surface or the rear surface of the battery cell stack 120, and the other surface of the busbar frame 300 may be connected with the busbars 510 and 520 and/or the module connector 600. Further, as shown in Fig. 7, the busbar frame 300 may be formed with a holder 302 and a support 304 for mounting the module connector 610.

The busbar frame 300 may include an electrically insulating material. The busbar frame 300 may restrict the busbars 500 from making contact with other parts of the battery cells 110, except the parts where they are joined to the electrode leads 111 and 112, and can prevent the occurrence of an electrical short circuit.

The busbar frame 300 may be formed in two numbers, and may include a first busbar frame (may be referred to as reference number 300) located on the front surface of the battery cell stack 120 and a second busbar frame (not shown) located on the rear surface of the battery cell stack 120.

The busbar frame 300 can be coupled to the upper cover 330 to form a busbar assembly. The upper cover 330 may cover the corresponding portion into a size corresponding to the upper surface of the battery cell stack 120. In the process of housing the battery cell stack 120 inside the module frame 200, the upper cover 330 can protect a sensing unit 700 and the like.

The end plate 400 can be for protecting the battery cell stack 120 and electrical equipment connected thereto from external physical impacts by sealing the opened surface of the module frame 200. For this purpose, the end plate 400 may be made from a material having a predetermined strength. For example, the end plate 400 may include a metal such as aluminum.

The end plate 400 may be coupled (joined, sealed or closed) to the module frame 200 while covering the busbar frame 300 or the busbar 500 located on one surface of the battery cell stack 120. Each edge of the end plate 400 can be coupled to a corresponding edge of the module frame 200 by a method such as welding.

An insulation cover 800 for electrical insulation may be located between the end plate 400 and the busbar frame 300. The insulation cover 800 may be located on the inner surface of the end plate 400 and can be attached to the inner surface of the end plate 400, but this is not always the case.

The end plate 400 may be formed in two numbers, and may include a first end plate located on the front surface of the battery cell stack 120 and a second end plate located on the rear surface of the battery cell stack 120.

The first end plate can be coupled to the module frame 200 while covering the first busbar frame on the front surface of the battery cell stack 120, and the second end plate can be coupled to the module frame 200 while covering the second busbar frame.

The busbars 500 may be mounted on one surface of the busbar frame 300 and may be for electrically connecting the battery cell stack 120 or the battery cells 110 and an external device circuit. The busbar 500 is located between the battery cell stack 120 or the busbar frame 300 and the end plate 400, whereby they can be protected from external impacts and the like, and deterioration of durability due to external moisture and the like can be minimized.

The busbar 500 can be electrically connected to the battery cell stack 120 through the electrode leads 111 and 112 of the battery cells 110. Specifically, the electrode leads 111 and 112 of the battery cells 110 pass through a slit formed in the busbar frame 300 and then are bent to be connected (joined or coupled) to the busbar 500. The method of joining the electrode leads 111 and 112 to the busbar 500 is not particularly limited, but weld-joining can be applied as an example. The battery cells 110 constituting the battery cell stack 120 by the busbar 500may be connected in series or in parallel.

The busbar 500 may include a terminal busbar 520 for electrically connecting one battery module 100 to another battery module 100. At least a part of the terminal busbar 520 may be exposed to the outside of the end plate 400 in order to be connected with another external battery module 100, and the end plate 400 may be provided with a terminal busbar opening 400H for this purpose. Further, the insulation cover 800 coupled to the end plate 400 may also be provided with a second terminal busbar opening 800H corresponding thereto.

The terminal busbar 520 may further include a protrusion that protrudes toward the outside of the battery module 100 unlike other busbars 510, and the protrusion may be exposed to the outside of the battery module 100 via a terminal busbar opening 400H. The terminal busbar 520 may be connected with another battery module 100 or a BDU (Battery Disconnect Unit) via a protrusion exposed through the terminal busbar opening 400H, and may form a HV (high voltage) connection with them. Here, the HV connection is a connection that serves as a power source for supplying power, and means a connection between the battery cells 110 or a connection between the battery modules 100.

The module connector 600 and the sensing unit 700 can detect and control phenomena such as overvoltage, overcurrent, and overheating of the battery cell 110. The module connector 600 and the sensing unit 700 are for a LV (low voltage) connection, wherein the LV connection may mean a sensing connection for sensing and controlling the voltage or the like of the battery cell. Voltage information and temperature information of the battery cell 110 can be transmitted to an external BMS (Battery Management System) via the module connector 600 and the sensing unit 700.

The module connector 600 may transmit the collected data to an external control device and receive a signal from the external control device. The module connector 600 may transmit data acquired from a temperature sensor 730 and/or a sensing terminal 720 to a BMS (Battery Management System), and the BMS can control charging and discharging of the battery cells 110 based on the collected voltage data.

The module connector 600 may be mounted on the busbar frame 300 described above. At least a part of the module connector 600 may be exposed to the outside of the end plate 400, and the end plate 400 may be provided with a module connector opening 400L for that purpose. A second module connector opening 800L corresponding thereto may also be provided in the insulation cover 800 coupled to the end plate 400.

The sensing unit 700 may include a sensing terminal 720 for sensing voltage values of the busbar 500, a temperature sensor 730 for sensing a temperature inside the battery module 100, and a connection member 710 for connecting them.

Here, the connection member 710 may be arranged in a form extending along the longitudinal direction from the upper surface of the battery cell stack 120. The connection member may be a flexible printed circuit board (FPCB) or a flexible flat cable (FFC).

Meanwhile, as described above, an ignition phenomenon may appear inside the battery module 100 in which the battery cells 110 are stacked at a high density. When an ignition phenomenon occurs in one battery module 100, gas or the like is discharged through the openings 400H and 400L provided in the end plate, thereby damaging the terminal busbar 520 or the like, or alternatively, heat, gas, flame or the like of the battery module 100 are transferred to the battery module 100 adjacent thereto, thereby occurring continuous ignition phenomenon.

Specifically, the dimension of the terminal busbar opening 400H or the module frame opening 400L is mainly determined by the perimeter size of the terminal busbar 520 or the terminal size of the module connector 600. However, for ease of assembly or for manufacturing process reasons, the size of the terminal busbar openings 400H and 400L may be larger than the size of the exposed portion of an inner member, and a gap may occur between the openings 400H and 400L and the inner member exposed to the outside. Further, the above-mentioned inner members are located between the busbar frame 300 and the end plate 400. Thus, if the busbar frame 300 and the end plate 400 are not completely fitted to the periphery of the inner members, there is a problem that when an ignition occurs inside the battery module 100, gas is concentrated in such a gap space, whereby discharge of gas through the openings 400H and 400L is promoted. Here, the inner member may refer to the terminal busbar 520 or the module connector 600. Further, 'gap space' and 'gap' herein may be understood to be distinct from each other, but may be collectively referred to as the general word 'gap' in a broad category.

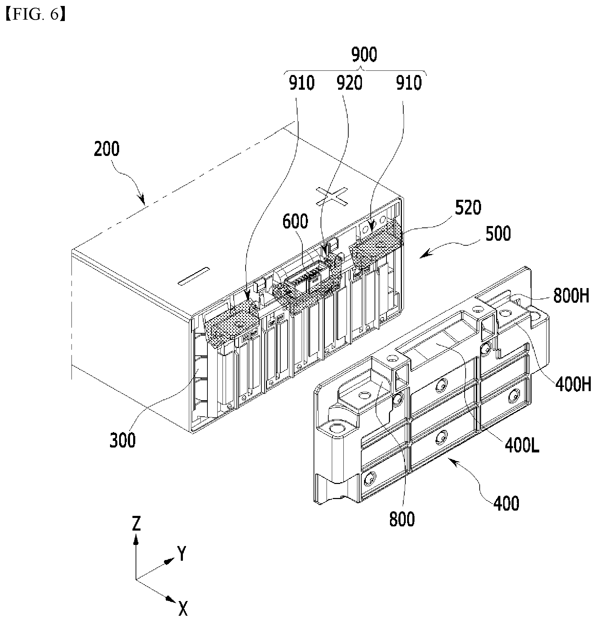

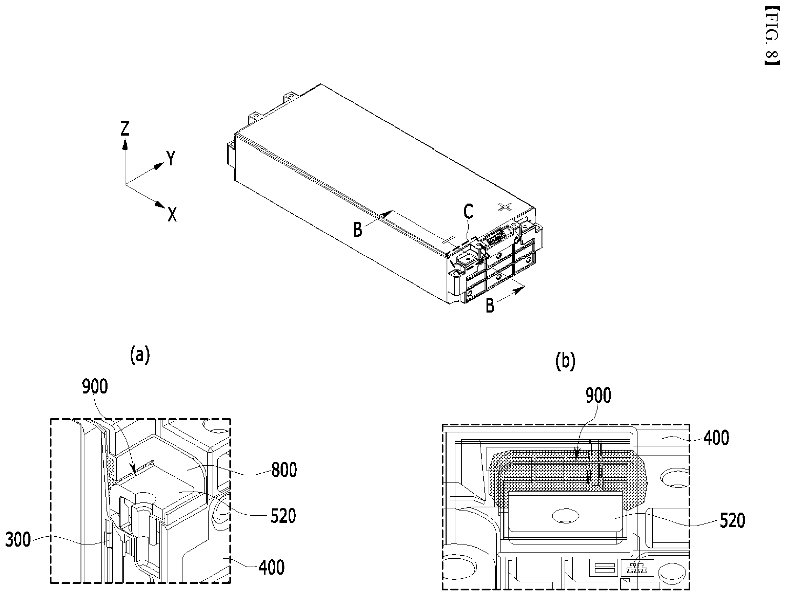

Fig. 6 is a diagram for explaining a sealing member included in the battery module of Fig. 3, Fig. 7 is a view in which the end plate is omitted from the battery module of Fig. 3, and Fig. 8 is another diagram for explaining a sealing member included in the battery module of Fig. 3.

Referring to Figs. 6 to 8, the battery module 100 according to an embodiment of the present disclosure may be provided with a sealing member 900 for sealing the openings 400H and 400L provided in the end plate. The sealing member 900 may form a seal around the inner member protruding to the outside, whereby discharge of gas through the openings 400H and 400L can be minimized.

Meanwhile, in describing the relationship between the end plate 400 and other members in the present disclosure, the end plate 400 may be interpreted as including an insulation cover 800 or other members attached/coupled to the inner surface of the end plate 400. For example, the gap between a terminal busbar opening 400H and a terminal busbar 520 may be interpreted as a gap between a second terminal busbar opening 800H and a terminal busbar 520. As another example, the gap space between the busbar frame 300 and the end plate 400 around the terminal busbar 520 may be interpreted as a gap space between the busbar frame 300 and the insulation cover 800.

The sealing member 900 may include a first sealing member 910 for sealing the terminal busbar opening 400H and a second sealing member 920 for sealing the module connector opening 400L.

The sealing member 900 may form a seal between the inner member and the openings 400H and 400L. The sealing member 900 may seal a gap between the inner member and the openings 400H and 400L. The sealing member 900 may contact the periphery of the protrusion of the terminal busbar 520, and may contact the terminal busbar opening 400H or the inside of the opening. The sealing member 900 may make contact with the periphery of the module connector 600, and may make contact with the module connector opening 400L or the inside of the opening. Thereby, the gap between the inner member and the openings 400H and 400L may be filled with the sealing member 900. The sealing member 900 can prevent gas from being discharged through the openings 400H and 400L. The relative movement of the inner member and the opening 400H, 400L can be prevented by the sealing member 900, and the two parts may not collide with each other by an external force.

The sealing member 900 may form a seal between the busbar frame 300 and the end plate 400 around the inner member. The sealing member 900 can seal a gap space around the terminal busbar 520 or the module connector 600. The sealing member 900 may be located between the busbar frame 300 and the end plate 400, and may fill a gap between the two members. The sealing member 900 can prevent gas from being discharged through the openings 400H and 400L by the movement of the gas along the gap space. The busbar frame 300 and the end plate 400 may be fixed to each other and supported by each other by the sealing member 900.

The sealing member 900 may include a flame retardant material. For example, the flame retardant material included in the sealing member 900 may be silicone or polyurethane. However, the flame retardant material included in the sealing member 900 of the present embodiment is not limited to the examples described above.

The sealing member 900 may be formed by curing the resin. Specifically, the resin may be applied to an object to be sealed in a viscous liquid state, and the sealing member 900 can be formed by curing the applied resin. A specific shape of the sealing member 900 appearing in the battery module 100 may be different.

In the assembly process of a conventional battery module 100, an inner member such as the busbar 500 or the module connector 600 is mounted on the busbar frame 300, and then the end plate 400 and the module frame 200 are coupled. In the battery module 100, the sealing member 900 is located between the busbar frame 300 and the end plate 400, and thus, the liquid state resin forming the sealing member 900 may be applied prior to assembly of the end plate 400.

Specifically, the battery module manufacturing method (1000S) may include a step of applying a liquid state resin to a periphery of the inner member mounted on a busbar frame 300 (1100S); a step of arranging an end plate 400 on the busbar frame 300 and coupling the module frame 200 and the end plate 400 (1200S); and a step of curing the resin (1300S).

Here, the step of applying the resin (1100S) includes a step of applying the resin to a periphery of the protrusion of the terminal busbar 520 (1110S); and/or a step of applying a resin to a periphery of the module connector 600 (1120S).

Further, the liquid state resin for forming the sealing member 900 can be injected through the openings 400H and 400L formed in the end plate 400 after the end plate 400 is assembled.

Specifically, the battery module manufacturing method (2000S) may include a step of arranging the end plate 400 on the busbar frame 300 and coupling the module frame 200 and the end plate 400 (2100S); a step of injecting a liquid state resin through the openings 400L and 400H formed in the end plate 400 (2200S); and a step of curing the resin (2300S).

Here, the step of injecting the resin (2200S) may include a step of injecting the resin through the terminal busbar opening (400H) (2210S); and/or a step of injecting the resin through the module connector opening 400L (2220S);

Here, the step of curing the resin (2300S) may include a step of curing the resin around the protrusion of the terminal busbar 520 (2310S); and/or a step of curing the resin around the module connector 600 (2320S).

Meanwhile, the above-mentioned battery module 100 can be included in a battery pack. The battery pack includes one or more battery modules according to the present embodiment, and may have a structure that is packed together with a battery management system (BMS) and a cooling device that control and manage battery's temperature, voltage, etc.

The battery module or the battery pack including the same can be applied to various devices. Such a device can be applied to a vehicle means such as an electric bicycle, an electric vehicle, or a hybrid vehicle, but the present disclosure is not limited thereto, and is applicable to various devices that can use a battery module or a battery pack including the same.

### [Description of Reference Numerals]

100: battery module
110: battery cell
111, 112: electrode lead
120: battery cell stack
200: module frame
300: busbar frame
400: end plate
400H: terminal busbar opening
400L: module connector opening
510: busbar
520: terminal busbar
600: module connector
700: sensing unit
800: insulation cover
900: sealing member

## Claims

1. A battery module (100) comprising:
a battery cell stack (120) in which a plurality of battery cells (110) are stacked in one direction,
a module frame (200) that houses the battery cell stack (120),
a busbar frame (300) that covers a front surface or a rear surface of the battery cell stack (120), and
an end plate (400) that couples to the module frame (200) and covers the busbar frame (300),
wherein the end plate (400) is formed with at least one opening (400H, 400L),
wherein a part of an inner member (520, 600) of the battery module (100) is exposed to the outside through the opening (400H, 400L),
wherein the battery module (100) includes a busbar (500) for electrical connection with an external device or a module connector (600),
wherein a protrusion of the busbar (500) or a terminal of the module connector (600) is exposed to the outside through the opening (400H,400L), and
**characterized in that**
a gap between the inner member (520, 600) and the opening (400H, 400L) is sealed with a sealing member (900),
wherein a gap between the periphery of the protrusion of the busbar (500) and the opening (400H) or a gap between the periphery of the terminal of the module connector (600) and the opening (400L) is sealed by the sealing member (900).

2. The battery module (100) according to claim 1, wherein:
the sealing member (900) is in contact with the protrusion of the busbar (500).

3. The battery module (100) according to claim 1, wherein:
the sealing member (900) is in contact with the module connector (600).

4. The battery module (100) according to claim 1, wherein:
the sealing member (900) is a flame retardant material.

5. The battery module (100) according to claim 4, wherein:
the flame retardant material includes silicone or polyurethane.

6. A method for manufacturing a battery module (100) according to claim 1, the method comprising the steps of:
applying a liquid state resin to a periphery of the inner member (520, 600) mounted on the busbar frame (300);
arranging an end plate (400) on the busbar frame (300) and coupling the module frame (200) and the end plate (400); and
curing the resin.

7. A method for manufacturing a battery module (100) according to claim 1, the method comprising the steps of:
arranging the end plate (400) on the busbar frame (300), and coupling the module frame (200) and the end plate (400);
injecting a liquid state resin through the opening (400H, 400L) formed in the end plate (400);
and
curing the resin.

8. A battery pack comprising at least one battery module (100) as set forth in claim 1.

## Patentansprüche

1. Batteriemodul (100), umfassend:
einen Batteriezellenstapel (120), in dem eine Mehrzahl von Batteriezellen (110) in einer Richtung gestapelt sind,
einen Modulrahmen (200), in dem der Batteriezellenstapel (120) aufgenommen ist,
einen Sammelschienenrahmen (300), der eine Vorderseite oder eine Rückseite des Batteriezellenstapels (120) abdeckt, und
eine Endplatte (400), die mit dem Modulrahmen (200) verbunden ist und den Sammelschienenrahmen (300) abdeckt,
wobei in der Endplatte (400) mindestens eine Öffnung (400H, 400L) ausgebildet ist,
wobei ein Teil eines inneren Elements (520, 600) des Batteriemoduls (100) durch die Öffnung (400H, 400L) nach außen freiliegt,
wobei das Batteriemodul (100) eine Sammelschiene (500) zur elektrischen Verbindung mit einem externen Gerät oder einen Modulstecker (600) umfasst,
wobei ein Vorsprung der Sammelschiene (500) oder ein Anschluss des Modulsteckers (600) durch die Öffnung (400H, 400L) nach außen freiliegt,
**dadurch gekennzeichnet, dass**
ein Spalt zwischen dem inneren Element (520, 600) und der Öffnung (400H, 400L) mit einem Dichtelement (900) abgedichtet ist,
wobei ein Spalt zwischen dem Rand des Vorsprungs der Sammelschiene (500) und der Öffnung (400H) oder ein Spalt zwischen dem Rand des Anschlusses des Modulsteckers (600) und der Öffnung (400L) durch das Dichtelement (900) abgedichtet ist.

2. Batteriemodul (100) nach Anspruch 1, wobei das Dichtelement (900) mit dem Vorsprung der Sammelschiene (500) in Kontakt steht.

3. Batteriemodul (100) nach Anspruch 1, wobei das Dichtelement (900) mit dem Modulstecker (600) in Kontakt steht.

4. Batteriemodul (100) nach Anspruch 1, wobei das Dichtelement (900) ein flammhemmendes Material ist.

5. Batteriemodul (100) nach Anspruch 4, wobei das flammhemmende Material Silikon oder Polyurethan umfasst.

6. Verfahren zur Herstellung eines Batteriemoduls (100) nach Anspruch 1, umfassend die Schritte:
Auftragen eines flüssigen Harzes auf einen Rand des auf dem Sammelschienenrahmen (300) montierten inneren Elements (520, 600);
Anordnen einer Endplatte (400) auf dem Sammelschienenrahmen (300) und Verbinden des Modulrahmens (200) mit der Endplatte (400); und
Aushärten des Harzes.

7. Verfahren zur Herstellung eines Batteriemoduls (100) nach Anspruch 1, umfassend die Schritte:
Anordnen der Endplatte (400) auf dem Sammelschienenrahmen (300) und Verbinden des Modulrahmens (200) mit der Endplatte (400);
Einspritzen eines flüssigen Harzes durch die in der Endplatte (400) ausgebildete Öffnung (400H, 400L);
und Aushärten des Harzes.

8. Batteriepack, umfassend mindestens ein Batteriemodul (100) nach Anspruch 1.

## Revendications

1. Module de batterie (100) comprenant :
un empilement de cellules de batterie (120) dans lequel une pluralité de cellules de batterie (110) sont empilées dans une direction,
un cadre de module (200) qui abrite l'empilement de cellules de batterie (120),
un cadre de barre omnibus (300) qui recouvre une surface avant ou une surface arrière de l'empilement de cellules de batterie (120), et
une plaque d'extrémité (400) qui couple au cadre de module (200) et recouvre le cadre de barre omnibus (300),
dans lequel la plaque d'extrémité (400) est formée avec une ou plusieurs ouvertures (400H, 400L),
dans lequel une partie d'un élément intérieur (520, 600) du module de batterie (100) est exposée à l'extérieur par l'ouverture (400H, 400L),
dans lequel le module de batterie (100) inclut une barre omnibus (500) pour une connexion électrique avec un dispositif externe ou un connecteur de module (600),
dans lequel une saillie de la barre omnibus (500) ou une borne du connecteur de module (600) est exposée à l'extérieur par l'ouverture (400H, 400L), et
**caractérisé en ce que**
un espace entre l'élément intérieur (520, 600) et l'ouverture (400H, 400L) est étanchéifié par un élément d'étanchéité (900),
dans lequel un espace entre la périphérie de la saillie de la barre omnibus (500) et l'ouverture (400H) ou un espace entre la périphérie de la borne du connecteur de module (600) et l'ouverture (400L) est étanchéifié par l'élément d'étanchéité (900).

2. Module de batterie (100) selon la revendication 1, dans lequel :
l'élément d'étanchéité (900) est en contact avec la saillie de la barre omnibus (500).

3. Module de batterie (100) selon la revendication 1, dans lequel :
l'élément d'étanchéité (900) est en contact avec le connecteur de module (600).

4. Module de batterie (100) selon la revendication 1, dans lequel :
l'élément d'étanchéité (900) est un matériau ignifuge.

5. Module de batterie (100) selon la revendication 4, dans lequel :
le matériau ignifuge inclut le silicone ou le polyuréthane.

6. Procédé de fabrication d'un module de batterie (100) selon la revendication 1, le procédé comprenant les étapes consistant à :
appliquer une résine à l'état liquide à une périphérie de l'élément intérieur (520, 600) monté sur le cadre de barre omnibus (300) ;
agencer une plaque d'extrémité (400) sur le cadre de barre omnibus (300) et coupler le cadre de module (200) et la plaque d'extrémité (400) ; et
durcir la résine.

7. Procédé de fabrication d'un module de batterie (100) selon la revendication 1, le procédé comprenant les étapes consistant à :
agencer la plaque d'extrémité (400) sur le cadre de barre omnibus (300) et coupler le cadre de module (200) et la plaque d'extrémité (400) ;
injecter une résine à l'état liquide par l'ouverture (400H, 400L) formée dans la plaque d'extrémité (400) ; et
durcir la résine.

8. Bloc-batterie comprenant un ou plusieurs modules de batterie (100) selon la revendication 1.
